# EUROPEAN PATENT APPLICATION

(11) **EP 4 516 877 A1**
(43) Date of publication of application: **05.03.2025**
(21) Application number: 23195457.9
(22) Date of filing: 05.09.2023
(51) Int. Cl.: C09K 11/06, G01N 21/64, G01N 21/81

(54) **ACTIVE MATERIAL CHANGING ITS SPECTROSCOPIC PROPERTIES UNDER THE INFLUENCE OF CHANGES IN AMBIENT HUMIDITY, METHOD OF OBTAINING THIS MATERIAL AND ITS APPLICATION**

(30) Priority: 01.09.2023 PL 44598723
(71) Applicant: Siec Badawcza Lukasiewicz - PORT Polski Osrodek Rozwoju Technologii, 54-066 Wroclaw (PL)
(72) Inventor: Duda, Lukasz, 51-505 Wroclaw (PL); Czajkowski, Maciej, 56-120 Brzeg Dolny (PL); Guzik, Malgorzata, 53-333 Wroclaw (PL)
(74) Representative: JWP Patent & Trademark Attorneys

(57) **Abstract**

The subject-matter of the invention is an active material changing its spectroscopic properties under the influence of changes in ambient humidity, characterised in that it comprises a matrix - a polyelectrolyte and a fluorescent dye, a method of obtaining this material and its use for monitoring relative ambient humidity.

## Description

The object of the present invention is an active material exhibiting changes in spectroscopic (absorption and emission) properties in the UV-Vis spectral range and pronounced colour changes under the influence of changing air humidity conditions, the method of obtaining this material and its application.

In recent years, the issue of optical and opto-electronic humidity sensors has been a popular research subject, due to the growing demand for humidity control means from industries such as e.g. electronics, greenhouse agriculture, storage, terrarium monitoring or packaging. Recently, the influence of changes in the humidity level on spectroscopic (absorption and emission) properties in the UV-Vis range of various systems arouses great interest of researchers.

Sulfonated polymers are promising chemical compounds for applications in moisture sensors, as they have the ability to absorb water. Sulfonated fluoropolymers known as Nafion^{®} and poly(4-styrenesulfonic acid) (PSSA) are of particular interest in these applications. Sensors based mostly on these polymers use the phenomena of changes in properties such as change of colouration, material impedance or spectrum of reflected light. In order to induce a colouration change, the systems are first doped with various dyes such as methylene blue, malachite green or crystal violet. Whereas, to induce changes in the spectrum of reflected light, multilayer structures are used, found, inter alia, in self-assembling block copolymers.

In addition, changes in luminescent properties in polymer systems doped with organic dyes exhibiting the phenomenon of the so-called aggregation-induced emission (AIE) are also used. In the latter systems, shifting of the maximum emission band under the influence of polymer swelling caused by water absorption, e.g. when ambient humidity increased, was observed. Moreover, for the PSSA itself, changes in phosphorescent properties were observed under the influence of changing ambient humidity.

So far, however, there have been no solutions in which both the measurement of the relative intensity of two absorption bands and the relative intensity of two emission bands are used to detect humidity.

Humidity detection based on the measurement of the relative intensity of two absorption and/or emission bands does not require the use of an additional reference in the system.

On the other hand, simultaneous measurement of both the absorption and emission spectrum may enable more accurate determination of the humidity level.

An additional advantage of detection using light emission measurement is the possibility of using an easily accessible excitation source for measurement, e.g. an LED or a simple laser diode because, in the case of measuring UV-Vis light absorption spectra, it is required to use a broadband light source or at least two monochromatic (or similar to monochromatic) light sources.

An important feature of a moisture-sensitive material is the simultaneous ability to determine a changing level of the humidity not only using specialised equipment (e.g. a UV-Vis spectrophotometer), but also with the naked eye. This requires the change in spectroscopic properties to be pronounced, which means that the intensity of the colouration must be as high as possible (high absorbance value), and the spectral shift between the two relatively changing absorption bands as large as possible and within the UV-Vis range.

To colorimetrically determine humidity, systems of polymers doped with dyes may be used. Colouration changes are caused by a change in the form of the dye. An example may be the protonation or deprotonation of a dye molecule caused by a change in the pH of the polymer matrix due to the absorption of water from the air.

To obtain a system that, under the influence of changes in humidity, will additionally be characterised by changes in the emission spectrum, it is necessary to find a luminescent dye that, in the appropriate pH range, will change its form under the influence of protonation or deprotonation, which consequently will lead to changes in the relative intensity of the emission bands.

Most organic dyes are based on a chromophore composed of a system of conjugated *π* bonds and auxochromes - functional groups attached directly to this system. Organic dyes having chemical groups subject to protonation within the chromophore or auxochromes are known for the fact that their spectroscopic properties may depend on the polarity of the solvent and the pH of the solution/matrix in which they are found. These dyes have a heteroatom in the system of conjugated *π* bonds *e.g*. nitrogen or amino, *N-*alkylamino and *N,N*-dialkylamino groups substituted to this system. Examples of such dyes are 7-aminocoumarin derivatives additionally comprising an aromatic group with a heteroatom and dyes from the group of oxazines or oxazones. Under acidic conditions, they may undergo protonation, resulting in appearance of a new absorption and emission band.

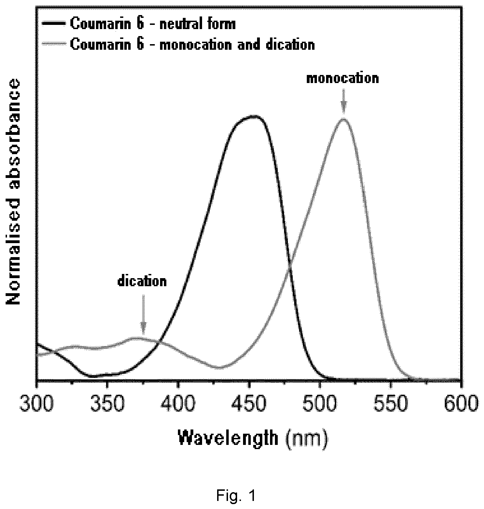

For example, in the case of dyes from the coumarin group, these bands are shifted towards a longer wavelength compared to the bands observed for the neutral (non-protonated) form. Additionally, a dication form of a dye is observed under highly acidic conditions. Its bands (absorption and emission) are shifted towards higher energies compared to the bands corresponding to the neutral form and the monocation. The location of the absorption bands of various forms for an exemplary dye of the coumarin family - coumarin 6 is shown in Fig. 1. The introduction of such a dye into an appropriate matrix (with high acidity) enable to observe a monocation-dication equilibrium, which is dependent on the pH value change under the influence of water absorption by the matrix (which is related to the relative ambient humidity). For example, the higher the ambient humidity, the more water absorbed and the lower the acidity (higher the pH of the matrix). These properties make such dyes good candidates for use in optical humidity sensors.

Currently, however, there are no solutions on the market using polymers (including polyelectrolytes) doped with a luminescent dye showing acid-base equilibrium, in which changes in the relative intensity of both absorption and emission bands of such a system are used to detect humidity. In addition, the change in humidity can be monitored visually by observing a clearly changing colour in daylight or UV light.

Application US2015122017A1 discloses a humidity sensor based on a change in colouration and a change in resistance. The sensor is made of a thin layer of polyelectrolyte with a thickness in the range of 1-1000 nm and is capable of real-time operation. The material used to produce the thin layer is a polyelectrolyte in the form of a copolymer - poly(styrenesulfonate-b-methylbutylene) (PSS-b-PMB). The polyelectrolyte layer is formed on the reflective layer. The polyelectrolyte layer changes its colour (to purple, blue, green, yellow, orange and red) and electrical resistance as humidity changes and thickness changes (due to absorption of water from the air). The change in colouration results from a change in the spectrum of light reflected on the produced layered structure. The sensor has a response rate of less than one minute.

Application WO2017165907A1 discloses a moisture sensitive device consisting of a substrate and a moisture sensitive coating present on at least part of the substrate. The coating consists of many of bilayers (from 1 to about 1000), composed of a polymer of a polycationic and polyanionic character. The thickness of the entire coating depends on the ambient humidity. The incident light is partially reflected from subsequent layers of the coating and interferes. A change in the degree of humidity leads to a change in the interference conditions of the individual reflected rays, resulting in a change in the reflection spectrum/intensity of the light reflected from the coating.

Application DE19942317C2 discloses a method of measuring the humidity of a solid, liquid or gaseous material by bringing it closer to a sensor material made of a water-insoluble polymer matrix comprising a dye. The emission or absorption spectrum of the dye comprises of at least one band, which position on the spectrum depends on the moisture content of the matrix. After the exchange of moisture between the sensing material and the tested material, the position of the absorption band is measured, using an appropriate light source and detector. On this basis and based on the calibration curve, the moisture content of the tested material is determined. Also disclosed is a sensor to implement the method, said sensor comprising a water-insoluble polymer matrix that comprises a dye. The dye has at least one absorption or emission band, which position on the spectrum is dependent on the moisture content of the matrix. This phenomenon is used to determine the humidity level. The shift of the band after water absorption is caused by the solvatochromic effect. Dyes such as 2,6-diphenyl-4- (2,4,6-triphenylpyridinium-1-yl)-phenolate and 5-dimethylamino-5'-nitro-2,2'-bithiophene and fluorescent 5-amino-2-methyl-1,3-isoindolinodione are used. Polymer matrices may be selected from: cellulose acetate, cellulose acetate butyrate, poly(methacrylonitrile), polyamide, 4-vinylpyridine-styrene copolymer, or mixtures thereof. If the polymer matrix is placed in a sensor that is connected to the light source and spectrometer via waveguides, the moisture content can be determined remotely. The approach has particular advantages when it comes to determining moisture in solid loose materials, and, above all, for monitoring internal building elements made of materials such as concrete.

Application WO2013142886A1 discloses an optochemical sensor, consisting of a layer of spun polymer nanofibres doped with a luminescent dye. A layer of nanofibres is placed on a support. The emission properties of the sensor layer change under the influence of substances and factors present in the gaseous or liquid phase. These substances and factors may include: O₂, CO₂, lactates, glucose, NH₃, SO₂, H₂O₂, nitrogen oxides, halogenated hydrocarbons and ions or chemical and physical properties such as pH value, humidity and temperature. The nanofibres forming the sensing layer are made of polymers such as: cellulose, cellulose acetate (CA), hydroxyethyl cellulose, chitosan, dibutyrylchitin, carboxymethyl cellulose (CMC), ethyl cellulose, trimethylsilyl cellulose (TMSC), collagen, dextran, gelatin, gluten, hyaluronic acid, ethylene-vinyl alcohol copolymer (EVOH), polyvinyl butyral (PVB), polydimethylsiloxanes (PDMS), polyamides (PA), polyacrylic acid (PAA), polyacrylonitrile (PAN), polycaprolactone (PCL), polyethylene oxide (PEO), polyoxymethylene (POM), polyesters, such as polyethylene terephthalate (PET) and polybutylene terephthalate (PBT), polybutylene succinate (PBS), polytrimethylene terephthalate; polylactide (PLA) and polyglycolides (PLGA) and copolymers thereof, polyacrylates, such as polymethyl methacrylate (PMMA), polyacrylamides, polyhydroxyethylacrylate (poly-HEMA), polyglycols, polysulphone (PSU), polyetherimide (PEI), polythiophenes, polyaniline (PANi), polysilanes, polyimides, polypyrrole, ethyl vinyl acetate copolymers (EVAc), polystyrene (PS), polyurethanes (PU), polyvinyl alcohol (PVOH), polyvinyl chloride (PVC), polyvinylidene fluoride (PVDF), and fluorinated copolymers, polyamines such as, for example, polyvinylpyrrolidone (PVP); polycarbonates (PC), polyvinylcarbazole, or mixtures thereof. The fibres are characterised by a diameter ranging from 50 nm to 1000 nm. The nanofibres are doped with at least one luminescent dye selected from a group comprising metalloporphyrins, benzoporphyrins, azabenzoporphyrins, naphthoporphyrins, phthalocyanines, polycyclic aromatic hydrocarbons, especially perylenes, perylenediimines, pyrenes, xanthene dyes, azo dyes, BODIPY dyes, aza-BODIPY dyes, cyanine dyes, metal-ligand dyes, especially bipyridines, bipyridyls, phenanthrolines, coumarins and ruthenium and iridium acetylacetonates; acridine dyes, oxazine dyes, coumarins, azaanulenes, squaraines, 8-hydroxyquinolines, polymethines, luminescent nanoparticles, such as quantum dots, nanocrystals; carbostyrilles, terbium complexes, inorganic luminophores, or dye derivatives of the above-mentioned classes, or dyes associated with ionophores (e.g., corona ether).

Products such as Humidity Indicator and Cobalt-Free Humidity Indicator, both produced by SCS from the United States, are also available on the market. These are cards which respond to a change in ambient humidity by a irreversible in real time change in the colouration of several fields corresponding to different humidity levels. The first product comprises cobalt salts which are harmful to health and both solutions require good lighting conditions for reading, and for reuse they require drying for a longer time or at an elevated temperature.

Therefore, the technical problem to be solved is to provide visual humidity sensors, as well as an active substance for the sensors, said sensors being free of cobalt salts, and at the same time characterised by: reversibility and quick response time, ability to be used repeatedly, high reliability of the measurement owed to detecting humidity in various ways - spectrophotometrically (absorption and emission spectra) and visually (by assessing the colour in visible light or in UV light).

The invention, being the subject-matter of the application, solves this problem by providing an active element of humidity sensor based on a polymer matrix comprising a dye characterised by the presence of a reversible transition between forms with different degree of protonation under the influence of changes in air humidity. A change in the degree of protonation of the dye leads to a change in the spectroscopic properties of the material - a change in the relative intensity of the absorption/emission bands in the UV-Vis range. The change in the degree of protonation, and consequently in the colour and luminescent properties, occurs when the pH of the matrix - *i.e.* a low pH polyelectrolyte in which the dye is placed - changes as a result of water absorption or desorption, caused by a change in air humidity. This change is quick and reversible. The changing colour is visible to the unaided eye in conditions of sufficient lighting, as well as in the dark after excitation with a light source with the appropriate wavelength. The relative change in the intensity of the absorption/emission bands of the described material can also be monitored by photometric or spectrophotometric measurements in the UV-Vis range (measurement of the intensity of the absorption and emission bands or absorption and emission spectra).

The essence of the invention is an active material changing its spectroscopic properties under the influence of changes in ambient humidity, characterised in that it comprises a matrix - a polyelectrolyte and a fluorescent dye.

Preferably, the matrix : fluorescent dye mass ratio is in the range from 99.9 : 0.1 to 90 : 10, preferably 95 : 5.

Preferably, the matrix is PSSA.

Preferably, the fluorescent dye is a luminescent dye of the donor-*π*-acceptor type, comprising in its chemical structure at least two groups subject to protonation under the influence of a strong acid.

Preferably, the groups subject to protonation are groups selected from the group comprising primary, secondary and tertiary amines and heteroaromatic nitrogen-comprising groups, preferably benzothiazole, benzoxazole, benzimidazole as well as *N,N*-dialkylamines, *N,N*-dicycloalkylamines or *N*-alkyl-*N*-arylamines, such as *N,N-*diethylamine or *N*-alkylbenzimidazole and combinations thereof.

Preferably, the fluorescent dye is a compound of general formula (I): 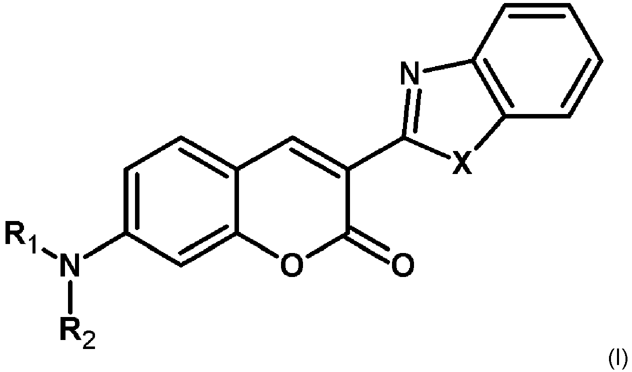 or of general formula (II): 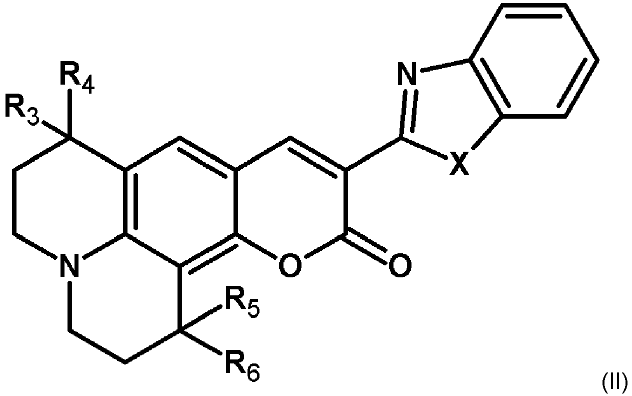 wherein
R₁, R₂ = CH₂CH₃;
R₃, R₄, R₅, R₆ = H or CH₃;
X = S, O, NH, NCH₃;
or a dye selected from the group comprising Nile red, Nile blue A or oxazine 170.

Most preferably, the fluorescent dye is coumarin 6. The fluorescent dye is sensitive to the pH of the matrix in such a way that as the pH changes, its absorption and photoluminescent properties in the visible range change. It is important that the change in the pH of the matrix occurring under the influence of changes in the humidity degree of the matrix corresponds to the pH range at which the change of the dye protonation degree occurs.

Preferably, the moistened material has an absorption band shifted by at least 110 nm and an emission band shifted by at least 60 nm towards longer wavelengths relative to the dry material.

It is also possible to introduce other substituents into the chemical structure of the fluorescent dye (at any position), *e.g*. alkyl substituents or substituents that link to the chromophore with an alkyl chain. It is also possible to extend the alkyl chains present in the structure, as they do not have any major influence on the main chromophore, and thus do not significantly affect the change in colouration. Additional chromophore moieties can also be introduced into the structure of the molecule, which involves a change in colouration.

A particularly advantageous feature of the active material is that it has a reversible change of spectroscopic properties.

Emission from various forms of the dye (spectrally separated emission bands) can be recorded after excitation by a single source of monochromatic light.

The essence of the invention is also a method of obtaining the material as defined in claims 1 to 9 on a substrate comprising the following steps:
a) immersing the substrate in the solution of the active material,
b) withdrawing the substrate out of the solution of the active material at a speed from 50 to 240 mm/min,
c) leaving a layer of the material with a thickness of 200 to 1000 nm on the substrate,
d) drying the active material left on the substrate at room temperature,
characterised in that prior to step a) a 30 % (w/v) aqueous PSSA mixture comprising a fluorescent dye is prepared, and then the resulting mixture is diluted with ethanol in a volume ratio from 1 : 8 to 1 : 5 (mixture : ethanol) and then sonicated at a temperature of 50 °C until the dye is completely dissolved.

Preferably, the substrate is a cuboid-shaped substrate which is transparent to light, preferably soda-lime glass.

Preferably, the layer of the active material left on the substrate in step c) has a thickness from 300 to 700 nm.

The essence of the invention is also the use of the active material as defined in claims 1-9 to monitor relative ambient humidity in the range from 20 % to 80 %.

The active material of the sensors can be used to monitor ambient humidity by measuring both the relative absorbance value and the relative emission intensity at specific wavelengths. It can also be used to monitor ambient humidity by visual observation of the colouration change in visible light.

The invention is illustrated by the drawings, of which:
**Fig. 1** shows the normalised absorption spectra of coumarin 6 solutions (in ethanol) present in neutral form and in dication-monocation equilibrium after the addition of acid (HCl).

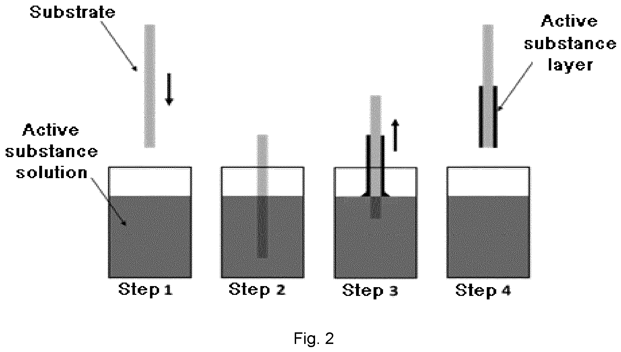

**Fig. 2** shows a diagram of dip coating: steps 1, 2 - substrate immersion, steps 3, 4 - controlled substrate withdrawal.

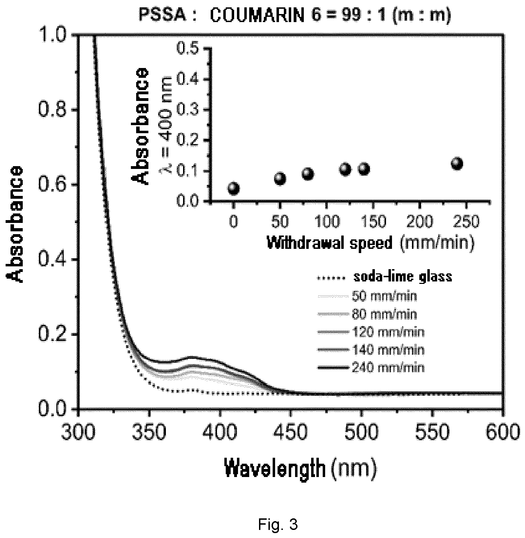

**Fig. 3** shows the absorption spectra and absorbance values (for λ = 400 nm) of layers produced with different withdrawal speeds (PSSA to coumarin 6 mass ratio is 99 : 1). Measurement under conditions of 20 ± 5 % relative humidity.

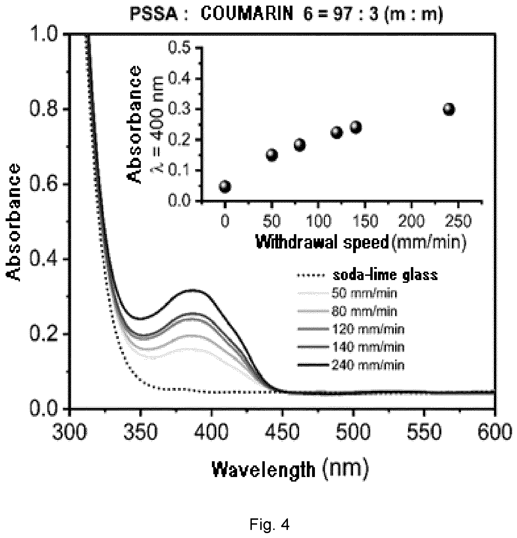

**Fig. 4** shows the absorption spectra and absorbance values (for λ = 400 nm) of layers produced with different withdrawal speeds (PSSA to coumarin 6 mass ratio is 97 : 3). Measurement under conditions of 20 ± 5 % relative humidity.

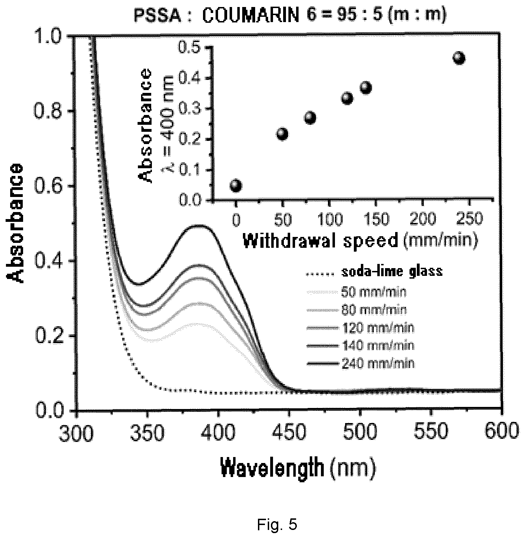

**Fig. 5** shows the absorption spectra and absorbance values (for λ = 400 nm) of layers produced with different withdrawal speeds (PSSA to coumarin 6 mass ratio is 95 : 5). Measurement under conditions of 20 ± 5 % relative humidity.

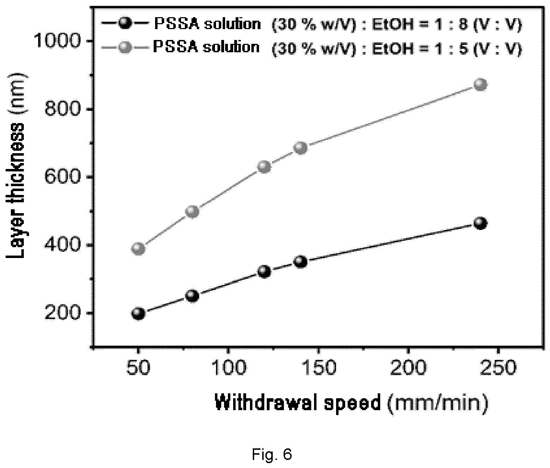

**Fig. 6** shows dependence of the layer thickness on the withdrawal speed of substrates from solutions with different concentrations of PSSA (aqueous PSSA solution to ethanol volume ratio is 1 : 8 and 1 : 5). Measurement under conditions of 53 ± 5 % relative humidity.

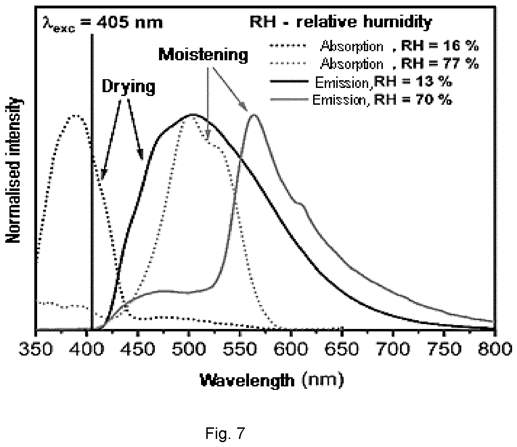

**Fig. 7** shows the normalised absorption and emission spectra of an exemplary active layer under various moisture conditions. The wavelength of the laser used for the excitation in the relative emission intensity measurements is marked.
**Fig. 8** shows the ratio of the intensity of the absorption bands in dependence of the relative ambient humidity and a photograph showing changes in the colouration of the layer in daylight (moistening and drying cycle).
**Fig. 9** shows the ratio of the intensity of the emission bands in dependence of the relative ambient humidity and a photograph showing changes in the colouration of the layer in UV light (moistening and drying cycle).
**Fig. 10** shows the scale of change in the colouration of the layer depending on the relative ambient humidity. RH - relative humidity. The black arrow-head shows the RH values, between which the appearance of pink colouration is observed, which makes it possible to determine if a given humidity level is exceeded (approx. 51 %).

### Embodiments

### Example 1 Preparation of the active material

45 mg of coumarin 6 (98 %, Sigma-Aldrich) was weighed into a glass vial and 3 ml of aqueous PSSA solution (30 % w/v, Mw = 75000, Alpha Aesar) was added. This was diluted by adding 15 ml of ethanol (99.8 %, Chempur) - in a 1 : 5 volume ratio. The suspension prepared in this way was sonicated at a temperature of 50 °C using an ultrasonic cleaner to completely dissolve the dye and obtain a clear solution. In one embodiment, the operating frequency of the ultrasonic cleaner was 37 kHz and in another embodiment it was 80 kHz.

### Example 2 Preparation of the sensor layer

The soda-lime glass substrate with dimensions of 76 mm x 25 mm x 1 mm was subjected to a washing procedure consisting in washing with a stream of deionised water, followed by washing with acetone, isopropanol, deionized water and drying with a stream of nitrogen. The substrate prepared in this way was immersed in the beaker with a solution of the active material obtained in Example 1, with the immersion speed being irrelevant. The substrate was withdrawn with a speed of 140 mm/min, leaving a submicron layer of the active material on both sides of the substrate.

The thickness of the layer obtained in this way was determined by means of a spectroscopic ellipsometer under conditions of relative humidity of 53 % and temperature of 19.3 °C. Said thickness was approx. 685 nm. The obtained layer was stored under conditions of relative humidity of 25 % and at room temperature. Under such conditions, the layer was characterised by a slight yellow colouration - a visible absorption band with a maximum at approx. 380 nm.

### Example 3 Determination of air humidity by light absorption measurement

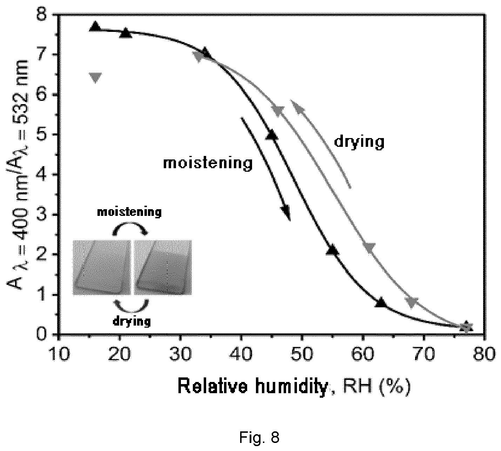

The layer prepared as described in Example 2 was placed in the axis of the measurement setup composed of a halogen illuminator with an OSL2 optical fibre output (ThorLabs) emitting in the visible range and of a QE65 Pro optical fibre spectrophotometer (Ocean Optics). The entire setup was sealed in a measuring chamber, where the humidity was monitored using a commercially available humidity sensor ETH 8003 (Eurochrom). The humidity was controlled by changing the flow rate of two gas streams: dry stream of nitrogen and wet stream of nitrogen passing through a scrubber with distilled water at a temperature of approx. 40 °C. The flow rate was controlled using a VFB-68 flow meter (Dweyer). Measurements of the light absorption by the layer were made after measurement of the baseline for the substrate without the applied layer. Measurements of absorption were made after stabilization of the humidity in the measuring chamber and the readings on the thermo-hygrometer. As the humidity in the chamber increased, a decrease in the intensity of the absorption band with maximum at a wavelength of approx. 380 nm and an increase in the intensity of the absorption band at a wavelength of approx. 500 nm were observed. The ratio of the intensity of the absorption bands depending on the relative ambient humidity is shown in Fig. 8.

The presented curves can be used to determine the ambient humidity level based on layer absorption measurements. The changes in colouration could also be observed with the naked eye.

### Example 4 Determination of air humidity by light emission measurement

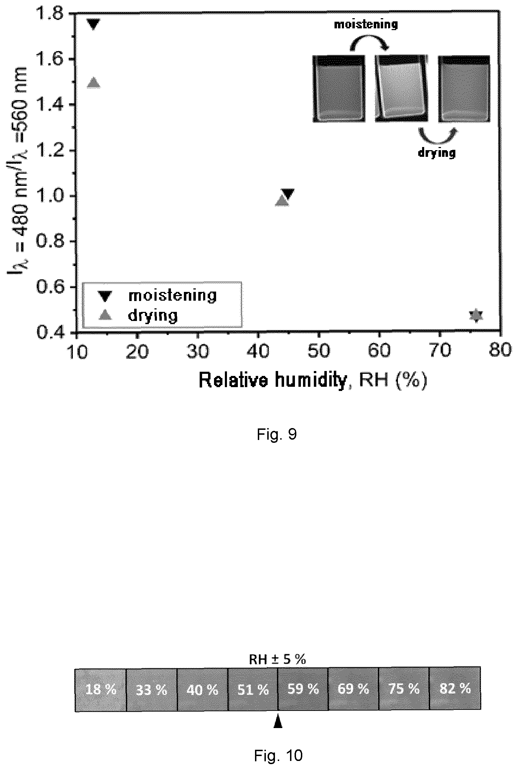

The layer prepared as described in Example 2 was placed in the arrangement described in Example 3. The arrangement was modified by replacing the broadband light source with a monochrome laser light with a wavelength of 405 nm (laser diode, RGB Laser Systems). The laser beam was irradiating the layer at an angle of approx. 60 ° with respect to its normal line. The power of the laser beam was limited with a neutral-density filter. A QE65 Pro (Ocean Optics) fibre optic spectrophotometer was set on the other side of the substrate. The change in humidity in the measuring chamber led to changes in the shape of the recorded emission spectrum and the location of its maximum. As the degree of air humidity increased, a decrease in the intensity of the band with a maximum at approx. 480 nm and an increase in the intensity of the emission band with a maximum at approx. 560 nm were observed. The ratio of the relative intensity of the emission bands depending on the relative ambient humidity is shown in Fig. 9. The presented measurement points can be used to determine the ambient humidity level based on layer emission measurements.

### Example 5 Determination of air humidity by visual observation of the layer in daylight

The sensor layer prepared as described in Example 2 was placed in the setup described in Example 3. The setup was modified by removing the light source and the spectrophotometer. In the upper part of the measuring chamber, a measuring window was cut out, which enabled to take photographs of the layer under different relative humidity conditions in the setup. Based on the photographs, a scale was prepared showing the observed colour of the layer and the relative ambient humidity (Fig. 10). Up to a level of approx. 51 % relative humidity, a slightly yellow or slightly pink colouration of the layer is observed. When the level of 51 % relative humidity is exceeded, the pink colouration becomes clearer (an example window on the scale, where RH = 59%). A further increase in humidity leads to intensification of the pink colouration. It is possible to easily determine if the humidity level of approx. 51% is exceeded as the appearance of pink colouration of the layer can be observed.

### References

Y. Sadaoka, M. Matsuguchi, Y. Sakai, Y. U. Murata, Optical humidity sensing characteristics of composite thin films of hydrolysed nafion-dye with a terminal N-phenyl group, J. Mater. Sci. 27 (1992) 5095-5100, doi: 10.1007/BF01105279.
S. Otsuki, K. Adachi, Characterization of Nafion solutions and films and observation of the casting process using basic dyes as optical probes, J. Appl. Polym. Sci. 56 (1995) 697-705, doi: 10.1002/app.1995.070560607.
I. M. Raimundo, R. Narayanaswamy, Evaluation of Nafion-Crystal Violet films for the construction of an optical relative humidity sensor, Analyst, 124 (1999) 1623-1627, doi: 10.1039/a905264j.
S. Otsuki, K. Adachi, Metachromasy in polymer films. Changes in the absorption spectrum of methylene blue in nafion films by hydration, Polym. J. 25 (1993) 1107-1112, doi: 10.1295/polymj.25.1107.
Y. Itagaki, S. Nakashima, Y. Sadaoka, Optical humidity sensor using porphyrin immobilized Nafion composite films, Sens. Actuators B Chem. 142 (2009) 44-48, doi: 10.1016/j.snb.2009.07.033.
C. P. L. Rubinger, C. R. Martins, M. De Paoli, R. M. Rubinger, Sulfonated polystyrene polymer humidity sensor : Synthesis and characterization, Sens. Actuators B Chem. 123 (2007) 42-49, doi: 10.1016/j.snb.2006.07.019.
E. Kim, S. Y. Kim, G. Jo, S. Kim, and M. J. Park, Colorimetric and resistive polymer electrolyte thin films for real-time humidity sensors, ACS Appl. Mater. Interfaces 4 (2012) 5179-5187, doi: 10.1021/am3011115.
L. Yu, H. Xu, T. M. Monro, D. G. Lancaster, Y. Xie, H. Zeng, G. Y. Chen, X. Liu, Ultrafast colorimetric humidity-sensitive polyelectrolyte coating for touchless control, Mater. Horizons 4 (2017) 72-82, doi: 10.1039/c6mh00317f.
Y. Jiang, Y. Cheng, S. Liu, H. Zhang, X. Zheng, M. Chen, M. Khorloo, H. Xiang, B. Z. Tang, M. Zhu, Solid-state intramolecular motions in continuous fibers driven by ambient humidity for fluorescent sensors, Natl. Sci. Rev. 8 (2020) 135/1-135/12, doi: 10.1093/nsr/nwaa135.
A. Qiagedeer, H. Yamagishi, M. Sakamoto, H. Hasebe, F. Ishiwari, T. Fukushima, Y. Yamamoto, A highly sensitive humidity sensor based on an aggregation-induced emission luminogen-appended hygroscopic polymer microresonator, Mater. Chem. Front. 5 (2021) 799-803, doi: 10.1039/d0qm00722f.
T. Ogoshi, H. Tsuchida, T. Kakuta, T. Yamagishi, A. Taema, Ultralong RoomTemperature Phosphorescence from Amorphous Polymer Poly (Styrene Sulfonic Acid) in Air in the Dry Solid State, Adv. Funct. Mater. 28 (2018) 1707369/1-1707369/7, doi: 10.1002/adfm.201707369.

## Claims

1. An active material changing its spectroscopic properties under the influence of changes in ambient humidity, **characterised in that** it comprises a matrix - a polyelectrolyte and a fluorescent dye.

2. The material of claim 1, **characterised in that** the matrix : fluorescent dye mass ratio is in the range of from 99.9 : 0.1 to 90 : 10, preferably 95 : 5.

3. The material of any one of claims 1 to 2, **characterised in that** the matrix is a PSSA.

4. The material of any one of claims 1 to 3, **characterised in that** the fluorescent dye is a luminescent dye of the donor-*π*-acceptor type, comprising in its chemical structure at least two groups subject to protonation under the influence of a strong acid.

5. The material of claim 4, **characterised in that** the groups subject to protonation are groups selected from the group comprising primary, secondary and tertiary amines and heteroaromatic nitrogen-comprising groups, preferably benzothiazole, benzoxazole, benzimidazole, as well as *N,N*-dialkylamines, *N,N*-dicycloalkylamines or *N*-alkyl-*N*-arylamines, such as *N,N*-diethylamine or *N*-alkylbenzimidazole and combinations thereof.

6. The material of any one of claims 1 to 5, **characterised in that** it comprises a fluorescent dye of general formula (I): 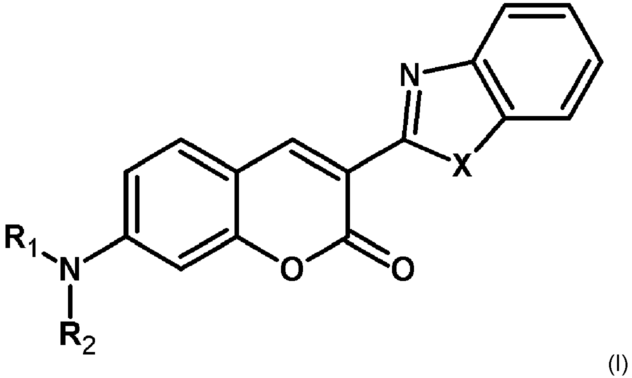 or of general formula (II): 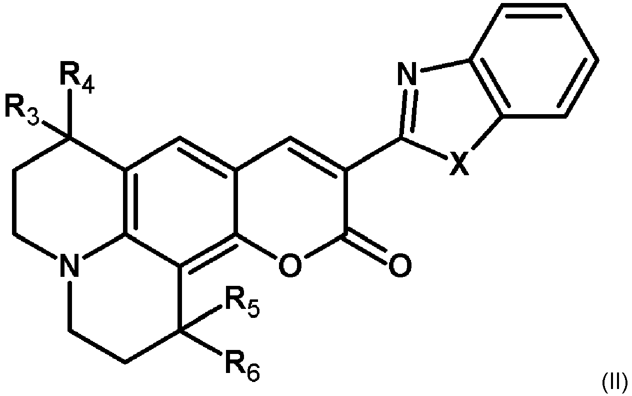 wherein
R₁, R₂ = CH₂CH₃;
R₃, R₄, R₅, R₆ = H or CH₃;
X = S, O, NH, NCH₃;
or a dye selected from the group comprising Nile red, Nile blue A or oxazine 170.

7. The material of any one of claims 1 to 6, **characterised in that** the fluorescent dye is coumarin 6.

8. The material of any one of claims 1 to 7, **characterised in that** the moistened material has an absorption band shifted by at least 110 nm and an emission band shifted by at least 60 nm towards longer wavelengths relative to the dry material.

9. The material of any one of claims 1 to 8, **characterised in that** it has a reversible change in spectroscopic properties.

10. A method of obtaining the material as defined in claims 1 to 9 on a substrate comprising the following steps:
e) immersing the substrate in the solution of the active material,
f) withdrawing the substrate out of the solution of the active material at a speed of from 50 to 240 mm/min,
g) leaving a layer of the material with a thickness of 200 to 1000 nm on the substrate,
h) drying the active material left on the substrate at room temperature,
**characterised in that** prior to step a) a 30% (w/v) aqueous PSSA mixture comprising a fluorescent dye is prepared, and then the resulting mixture is diluted with ethanol in a volume ratio from 1 : 8 to 1 : 5 (mixture: ethanol) and then sonicated at a temperature of 50 °C until the dye is completely dissolved.

11. The method of claim 10, **characterised in that** the substrate is a cuboid-shaped substrate which is transparent to light, preferably soda-lime glass.

12. The method of any one of claims 10 to 11, **characterised in that** the layer of the active material left on the substrate in step c) has a thickness of from 300 to 700 nm.

13. Use of the active material as defined in claims 1-9 to monitor relative ambient humidity in the range of from 20 % to 80 %.
